# EUROPÄISCHE PATENTSCHRIFT

(11) **EP 1 000 260 B1**
(45) Veröffentlichungstag und Bekanntmachung des Hinweises auf die Patenterteilung: **14.11.2001**
(21) Anmeldenummer: 98965125.2
(22) Anmeldetag: 12.12.1998
(51) Int. Cl.: F16C 11/06

(54) **BALGABDICHTUNG FÜR ZAPFENGELENKE, INSBESONDERE AN KRAFTFAHRZEUGEN**
BELLOWS SEAL FOR PIVOT JOINTS, ESPECIALLY IN AUTOMOBILES
JOINT A SOUFFLET POUR ARTICULATIONS A PIVOT, EN PARTICULIER MONTEES SUR DES VEHICULES AUTOMOBILES

(30) Priorität: 23.12.1997 DE 19757434
(43) Veröffentlichungstag der Anmeldung: 17.05.2000
(73) Patentinhaber: DaimlerChrysler AG, 70567 Stuttgart (DE); TRW Fahrwerksysteme GmbH & Co. KG, 40547 Düsseldorf (DE)
(72) Erfinder: REETZ, Reinhard, D-73061 Ebersbach (DE); REICHELT, Helmut, D-73770 Denkendorf (DE); REUTTER, Josef, D-73249 Wernau (DE); SCHWARZ, Herbert, D-71334 Waiblingen (DE); ULKE, Walter, D-73765 Neuhausen (DE); HERMANS, Bernd, D-47574 Goch (DE); METTE, Ulrich, D-45289 Essen (DE); RAUKAMP, Karl-Rainer, D-41372 Niederkrüchten (DE)
(74) Vertreter: Patentanwalts-Partnerschaft Rotermund + Pfusch
(86) Internationale Anmeldenummer: DE9803684
(87) Internationale Veröffentlichungsnummer: WO9934122

(56) Entgegenhaltungen:
- DE-A- 4 413 664
- DE-U- 1 875 318
- US-A- 3 378 286
- US-A- 5 066 159

## Beschreibung

Die Erfindung betrifft ein Zapfengelenk mit einer Balgabdichtung, insbesondere an Kraftfahrzeugen nach dem Oberbegriff des Patentanspruchs 1. An dem zweiten Balgende dieser Balgabdichtung wird die Dichtung des Balginnenraumes gegenüber der Atmosphäre zusätzlich zu einer radialen Dichtung des Ringflansches des Balges gegenüber dem Zapfen durch eine kraft- und formschlüssige axiale Anlage an ein mit dem Zapfen fest außerhalb des Balges verbundenes Teil verstärkt.

Bei einem derartigen aus der Praxis und der DE 44 13 664 A1 an sich bekannten Zapfengelenk beschäftigt sich die Erfindung mit dem Problem, die Dichtwirkung an dem zweiten Balgende der Balgabdichtung zu verbessern.

Gelöst wird das erfindungsgemäße Problem durch eine Ausführung des gattungsgemäßen Zapfengelenkes mit Balgabdichtung nach den kennzeichnenden Merkmalen des Patentanspruchs 1.

Durch die erfindungsgemäßen Maßnahmen wird sowohl die radiale als auch die axiale Dichtung an dem zweiten Balgende erheblich verbessert. Zweckmäßige Ausgestaltungen der Erfindung sind Gegenstand der Unteränsprüche.

Die erfindungsgemäß erzielbare Dichtheit wird bei gattungsähnlichen Balgabdichtungen wie beispielsweise nach DE-GM 18 75 318 und US 3 378 286 ebenso wie bei der gattungsbildenden Balgabdichtung nach DE 44 13 664 A1 nicht erreicht. Dies beruht darauf, daß bei diesen bekannten Dichtungen die Gestaltung und der Aufbau der die eigentliche Dichtfunktion ausübenden Dichtungsbereiche nicht optimal aufeinander abgestimmt sind.

Ein Ausführungsbeispiel der Erfindung ist in der Zeichnung dargestellt.

Es zeigen
- Fig. 1: eine Ansicht eines Zapfengelenkes mit angeschraubtem Gegenstück bei einem aufgebrochen gezeichneten Teilbereich des Balges,
- Fig. 2: einen Ausschnitt nach II in Fig. 1 des Abdichtungsbereiches am zweiten Balgende.

In einem Gehäuse 1 eines Zapfengelenkes ist ein Zapfen 2 über einen nicht sichtbaren Kugelkopf kipp- und drehbeweglich gelagert.

Eine Dichtung zwischen dem Gehäuse 1 und dem beweglichen Zapfen 2 bewirkt ein Balg 3 aus elastischem Material. Dieser Balg 3 ist fest und dicht mit dem Gehäuse 1 an seinem ersten Ende verbunden. An seinem zweiten Ende umschließt der Balg 3 den Zapfen 2 radial dicht. Die Dichtung ist dabei derart, daß Dreh- und Schiebebewegungen zwischen dem Zapfen und dem Balg 3 möglich sind.

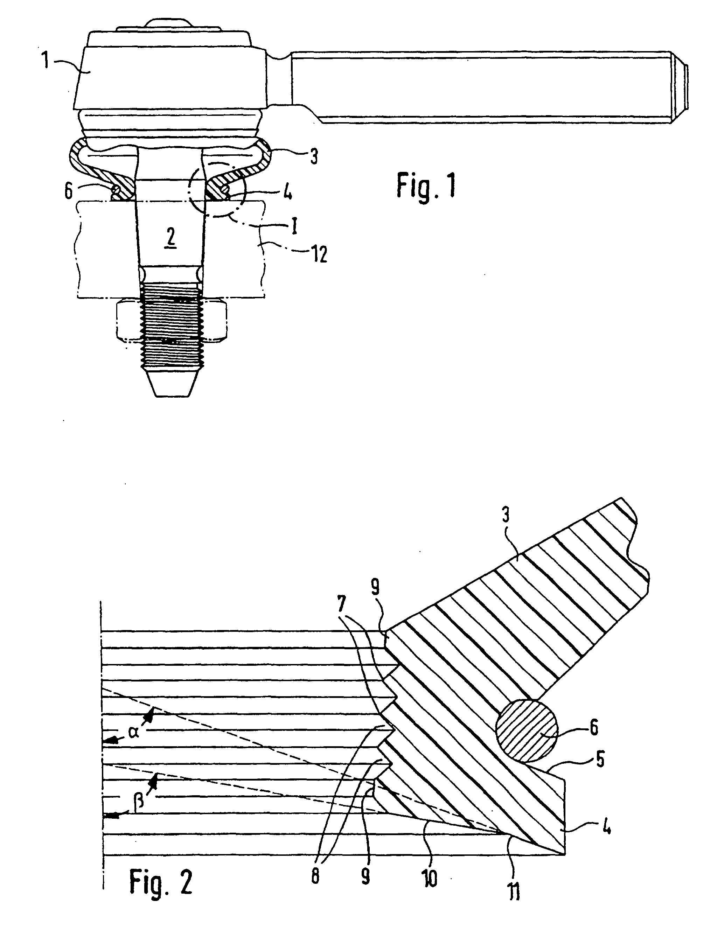

An dem zweiten, an dem Zapfen anliegenden Ende des Balges 3 ist ein stirnseitig frei auslaufender Ringflansch 4 angeformt. Die Anformung des Ringflansches 4 ist derart, daß in dem Übergangsbereich zu dem übrigen Balgkörper eine ringförmige Einschnürung 5 vorhanden ist. Diese ringförmige Einschnürung 5 nimmt einen geschlossenen unelastischen Ring 6 auf, durch den das Balgmaterial in dem Bereich des Ringflansches 4 radial dicht gegen den Zapfen 2 gespannt ist. Die Detaildarstellung nach Fig. 2 der Dichtabschnitte an dem freien, nicht fest mit dem Gehäuse 1 verbundenen Ende des Balges 3 zeigt, mit welchen konstruktiven Maßnahmen die erfindungsgemäße Kombination aus einer radialen und axialen Dichtung erzielt wird.

Der betreffende radiale Dichtabschnitt ist ein zylindrischer Abschnitt mit einer labyrinthartig wirkenden zylindrischen Dichtfläche. In dieser zylindrischen Dichtfläche sind Rillen eingeformt, die ringförmige Erhebungen 7 und Vertiefungen 8 mit direkter axialer Aneinanderreihung bilden. In jedem axialen Endbereich der zylindrischen Fläche ist die letzte Erhebung als eine Art Ringbund 9 mit einer zylindrischen Dichtfläche vorgesehen. Die zwischen den beiden äußeren Ringbunden 9 liegenden Erhebungen weisen radial innen jeweils linienförmige Dichtkanten auf.

Zu der Wandfläche, die von den radialen Innenflächen der Ringbunde 9 und den übrigen Erhebungen 7 gebildet wird, ist noch der Vollständigkeit halber zu bemerken, daß diese geringfügig konisch ausgebildet ist mit einem zum Balginneren hin zunehmenden Innendurchmesser. Eine entsprechende konusförmige Aufnahmefläche weist der Zapfen 2 auf, auf den das freie Ende des Balges 3 dicht aufgezogen wird.

Die Stirnfläche des Ringflansches 4 an dem freien Ende des Balges 3 ist aus einer inneren und einer äußeren konusförmig verlaufenden Ringfläche 10 bzw. 11 gebildet. Der Neigungswinkel der äußeren Ringfläche 11 gegenüber der Zapfenachse beträgt α = 70° und der entsprechende Winkel der inneren Ringfläche 10 mißt β = 80°.

Wichtig für eine gute Dichtung des der inneren Ringfläche 10 benachbart liegenden Ringbundes 9 ist, daß die innere Ringfläche 10 nicht direkt in den Ringbund 9 einmündet, sondern über eine Vertiefung 8.

Der Schnittpunkt der Konusflächen der inneren und der äußeren Ringfläche 10 bzw. 11 liegt auf einem Radius, der um 12 % geringer als der Außenradius des Ringflansches 4 ist. Die Höhe des Ringflansches 4 beträgt 8 % mit Bezug auf dessen Außendurchmesser. Die dem Ring 6 zugewandte Flanke des Ringflansches 4 verläuft parallel der Konusfläche der äußeren Ringfläche 11.

Die Stirnfläche mit den Ringflächen 10 und 11 liegt bei an ein Gegenstück 12 montiertem Zustand des Zapfens 2 in einer gemeinsamen Ebene flach an dem Gegenstück an, wodurch eine axiale Dichtung zusätzlich zu der radialen Dichtung des Ringflansches 4 gegeben ist. Das Gegenstück 12 muß eine ebene Auflagefläche besitzen. Bei einem aus Metall bestehenden Gegenstück 12 muß dessen Oberfläche zur Erzielung einer ausreichenden axialen Dichtung eine Rauigkeit von R_{Z} ≤ 40 besitzen. Ist das metallische Gegenstück 12 ein Schmiedeteil, dann muß dessen dichtende Oberfläche eine Qualität besitzen, die bestimmt ist durch c = 25/tpi 80.

Die axiale Höhe der Einschnürung 5 ist geringfügig kleiner als der Durchmesser des in dieser liegenden Ringes 6. Dadurch erzeugt der Ring 6 außer einer radialen auch eine axiale Spannkraft, die den Ringflansch 4 über dessen Stirnfläche fest dichtend an das Gegenstück 12 preßt.

Für ein axial festes und dichtes Anliegen des radial äußeren Bereiches des Ringflansches 4 ist es wichtig, daß der Ring 6 in einem möglichst weit radial außen liegenden Bereich des Ringflansches 4 axial angreift. Anders ausgedrückt bedeutet dies, daß der Ringflansch 4 radial möglichst wenig über den Außendurchmesser des Ringes 6 hinausragt. Desweiteren kommt es für eine optimale Dichtung auch darauf an, daß der Ringflansch 4 in seinem der äußeren Ringfläche 11 entsprechenden Bereich radial etwa parallel zueinander verlaufende Flanken besitzt.

## Patentansprüche

1. Zapfengelenk mit einer Balgabdichtung, insbesondere an Kraftfahrzeugen, mit einem das Gelenk umgebenden Balg, bei dem
- ein erstes Ende des Balges (3) fest und dicht mit dem Gelenk-Gehäuse (1) verbunden ist,
- das zweite Ende des Balges (3) einen Zapfen (2) ringförmig dicht umschließt,
- zwischen dem zweiten Balgende und dem Zapfen (2) Relativbewegungen möglich sind,
- in dem zweiten, dichtend wirkenden Balgende eine radial außen liegende, ringförmige Einschnürung (5) einen stirnseitig frei auslaufenden Ringflansch (4) ausbildet,
- in der Einschnürung (5) ein die radiale Dichtung des zweiten Balgendes unterstützender Ring (6) liegt,
- das zweite Balgende radial an dem Zapfen (2) über eine etwa zylindrische Dichtfläche anliegt, die mit labyrinthartig wirkenden, ringförmigen, axial abwechselnden Erhöhungen (7) und Vertiefungen (8) versehen ist,
- die Erhöhungen (7) der etwa zylindrischen Dichtfläche des zweiten Balgendes axial jeweils mit einer letzten Erhöhung enden, die als Ringbund (9) mit zylindrischer Innenfläche ausgebildet ist,
**gekennzeichnet durch** die bei dieser Balgabdichtung in noch nicht eingebautem Zustand vorliegenden Merkmale,
- die Stirnfläche des Ringflansches (4) ist in eine innere und eine äußere konkave Ringfläche (10) bzw. (11) aufgeteilt, von denen die äußere Ringfläche (11) stärker konkav als die innere Ringfläche (10) ausgebildet ist,
- die Neigungswinkel der Ringflächen (11, 10) gegenüber der Balgachse betragen etwa α = 70° für die äußere (11) und etwa β = 80° für die innere Ringfläche (10),
- die Radialerstreckung der äußeren Ringfläche (11) beträgt etwa 12 % mit Bezug auf den Radius der Außenringfläche des Ringflansches (4) des zweiten Balgendes,
- zwischen dem der inneren Ringfläche (10) benachbarten Ringbund (9) an dem Innendichtmantel des zweiten Balgendes und dieser inneren Ringfläche (10) liegt eine ringförmige Vertiefung (8),
- die Flanken des Ringflansches (4) des zweiten Balgendes verlaufen etwa parallel zueinander,
- die Höhe des Ringflansches (4) im Bereich der äußeren Ringfläche (11) mißt gleichmäßig etwa 8 % des äußeren Durchmessers des Ringflansches (4),
- der Ring (6) ist aus unelastischem Material geschlossen ausgebildet und ragt nach radial außen in einen von der äußeren Dichtfläche (11) gebildeten Ringbereich, in dem er axial an dem Ringflansch (4) anliegt,
- die axiale Höhe der Einschnürung (5) ist geringer als das Maß, bei dem der Ring (6) in dieser Einschnürung (5) ohne deren Aufweitung formschlüssig anliegen würde, so daß diese Einschnürung (5) bei eingesetztem Ring (6) **durch** elastisches Verformen des diese Einschnürung (5) bildenden Materials des Balges (3) aufgeweitet wird.

2. Balgabdichtung nach Anspruch 1,
**dadurch gekennzeichnet,**
**daß** der Ringflansch (4) an einer ebenen Gegendichtfläche aus Metall mit einer bearbeiteten Oberfläche mit einer Rauigkeit R_{Z} ≤ 40 oder einer geschmiedeten Oberfläche mit einer Struktur von c = 25/tpi 80 anliegt.

3. Balgabdichtung nach Anspruch 1 oder 2,
**dadurch gekennzeichnet,**
**daß** diese materialmäßig aus mit Gleitadditiven versehenem Polychloropren (CR) besteht.

## Claims

1. A pivot joint with a bellows seal, in particular on automobiles, with a bellows surrounding the joint, in which
- a first end of the bellows (3) is connected fixedly and leaktightly to the pivot housing (1),
- the second end of the bellows (3) annularly surrounds a pivot (2) leaktightly,
- relative movements are possible between the second bellows end and the pivot (2),
- in the second bellows end having a sealing effect, a radially outer annular contraction (5) forms an annular flange (4) terminating freely on the end face,
- a ring (6) assisting the radial sealing of the second bellows end lies in the contraction (5),
- the second bellows end bears radially against the pivot (2) via an approximately cylindrical sealing face which is provided with annular axially alternating elevations (7) and depressions (8) having a labyrinth-like effect,
- the elevations (7) of the approximately cylindrical sealing face of the second bellows end in each case terminate axially in a last elevation which is designed as an annular collar (9) with a cylindrical inner face,
defined by the features which are present in this bellows seal in the not yet installed state,
- the end face of the annular flange (4) is divided into an inner and an outer concave annular face (10) and (11), of which the outer annular face (11) is designed with greater concavity than the inner annular face (10),
- the angles of inclination of the annular faces (11, 10) relative to the bellows axis are approximately α = 70° for the outer annular face (11) and approximately (β = 80° for the inner annular face (10),
- the radial extent of the outer annular face (11) is approximately 12% in relation to the radius of the outer annular face of the annular flange (4) of the second bellows end,
- an annular depression (8) is located between the annular collar (9), adjacent to the inner annular face (10), on the inner sealing surface of the second bellows end and this inner annular face (10),
- the flanks of the annular flange (4) of the second bellows end run approximately parallel to one another,
- the height of the annular flange (4) in the region of the outer annular face (11) measures uniformly approximately 8% of the outer diameter of the annular flange (4),
- the ring (6) is designed to be closed end made of inelastic material and projects radially outward into an annular region which is formed by the outer sealing face (11) and in which said ring bears axially against the annular flange (4), and
- the axial height of the contraction (5) is smaller than the amount by which the ring (6) would bear positively in this contraction (5), without the latter being widened, so that, with the ring (6) inserted, this contraction (5) is widened as a result of the elastic deformation of the material of the bellows (3) forming this contraction (5).

2. The bellows seal as claimed in claim 1, wherein the annular flange (4) bears against a planar sealing counterface made of metal, with a machined surface having a roughness R_{z} ≤ 40 or a forged surface with a structure of c = 25/tpi 80.

3. The bellows seal as claimed in claim 1 or 2, which consists materially of polychloroprene (CR) provided with slip additives.

## Revendications

1. Articulation à pivot avec un joint à soufflet, notamment sur véhicules motorisés, avec un soufflet entourant l'articulation, sur laquelle
- une première extrémité du soufflet (3) est reliée fixement et étanchement au logement de l'articulation (1),
- la seconde extrémité du soufflet (3) entoure de manière annulaire et étanche un pivot (2),
- des mouvements apparents sont possibles entre la seconde extrémité du soufflet et le pivot (2),
- dans la seconde extrémité du soufflet, à effet étanche, un rétrécissement (5) annulaire et situé à l'extérieur dans le sens radial forme une collerette annulaire (4) se terminant libre du côté frontal,
- une bague (6) renforçant l'étanchement radial de la seconde extrémité du soufflet se trouve dans le rétrécissement (5),
- la seconde extrémité de soufflet porte en sens radial sur le pivot (2) par l'intermédiaire d'une surface d'étanchéité approximativement cylindrique qui est pourvue de bosses (7) et de creux (8) produisant un effet de labyrinthe, de forme annulaire et disposés en alternance en sens radial,
- les bosses (7) de la surface d'étanchéité approximativement cylindrique présentée par la seconde extrémité du soufflet se terminent chacune dans le sens axial par une dernière bosse qui est configurée comme un épaulement annulaire (9) avec surface intérieure cylindrique,
**caractérisée par** les caractéristiques définissant ce joint à soufflet avant son assemblage,
- la surface frontale de la collerette annulaire (4) est subdivisée en une surface circulaire concave extérieure (11), cette dernière étant de configuration plus concave que la surface circulaire intérieure (10),
- les angles d'inclinaison formées par les surfaces circulaires (11, 10) par rapport à l'axe du soufflet sont approximativement α = 70° pour la surface circulaire extérieure (11) et approximativement β = 80° pour la surface circulaire intérieure (10),
- l'extension radiale de la surface circulaire extérieure (11) est d'environ 12 % par rapport au rayon de la surface circulaire extérieure de la collerette annulaire (4) de la seconde extrémité du soufflet,
- un évidement (8) annulaire est situé entre l'épaulement annulaire (9) voisin de la surface circulaire intérieure (10) sur l'enveloppe étanche intérieure de la seconde extrémité du soufflet et cette même surface circulaire intérieure (10),
- les flancs de la collerette annulaire (4) que présente la seconde extrémité du soufflet sont à peu près parallèles entre eux,
- la hauteur de la collerette annulaire (4) aux alentours de la surface circulaire extérieure (11) est uniformément égale à environ 8 % du diamètre extérieur de la collerette annulaire (4),
- la bague (6) est réalisée en matériau non élastique et fermée et se prolonge vers l'extérieur en direction axiale dans un espace annulaire formé par la surface d'étanchéité extérieure (11), dans lequel elle porte sur la collerette annulaire (4) en direction axiale,
- la hauteur axiale du rétrécissement (5) est inférieure à la grandeur selon laquelle la bague (6) s'appuierait en engagement positif de forme dans ce rétrécissement (5) sans élargissement de celui-ci, de sorte qu'une fois la bague insérée (6), ce rétrécissement (5) est élargi par déformation élastique du matériau du soufflet (3) formant ce rétrécissement (5).

2. Joint à soufflet selon la revendication 1,
**caractérisé en ce**
**que** la collerette annulaire (4) porte sur une contre-surface d'étanchéité plane en métal avec une surface usinée présentant une rugosité R_{S} ≤ 40 ou une surface battue présentant une structure de c = 25/tpi 80.

3. Joint à soufflet selon la revendication 1 ou 2,
**caractérisé en ce**
**qu'**il est réalisé dans un matériau polychloroprène (QR) pourvu d'adjuvants lubrifiants.
